# EUROPÄISCHE PATENTSCHRIFT

(11) **EP 1 246 872 B1**
(45) Veröffentlichungstag und Bekanntmachung des Hinweises auf die Patenterteilung: **22.09.2004**
(21) Anmeldenummer: 01909602.3
(22) Anmeldetag: 11.01.2001
(51) Int. Cl.: C09D 5/02, C08J 3/07

(54) **VERFAHREN ZUR HERSTELLUNG EINER STRUKTURVISKOSEN, VON ORGANISCHEN LÖSEMITTELN FREIEN PULVERKLARLACK-SLURRY UND IHRE VERWENDUNG**
METHOD FOR PRODUCING A PSEUDOPLASTIC POWDERED LACQUER SLURRY FREE OF ORGANIC SOLVENTS AND THE USE THEREOF
PROCEDE POUR PREPARER UNE SUSPENSION DE PEINTURE PULVERULENTE SANS SOLVANT ORGANIQUE, A VISCOSITE INTRINSEQUE ET SON UTILISATION

(30) Priorität: 15.01.2000 DE 10001442
(43) Veröffentlichungstag der Anmeldung: 09.10.2002
(73) Patentinhaber: BASF Coatings AG, 48165 Münster (DE)
(72) Erfinder: RÖCKRATH, Ulrike, 48308 Senden (DE); OTT, Günther, 48167 Münster (DE); BERG, Jan, 48165 Münster (DE); JUNG, Werner-Alfons, 59387 Ascheberg (DE); WOLTERING, Joachim, 48159 Münster (DE)
(74) Vertreter: Fitzner, Uwe, Dr.
(86) Internationale Anmeldenummer: PCT/EP2001/000260
(87) Internationale Veröffentlichungsnummer: WO 2001/051569

(56) Entgegenhaltungen:
- WO-A-00/15721
- WO-A-00/69979
- WO-A-98/29465
- DE-A- 19 908 013

## Beschreibung

Die vorliegende Erfindung betrifft ein Verfahren zur Herstellung einer neuen von organischen Lösemitteln freien Pulverklarlack-Slurry, welche eine Strukturviskosität aufweist. Außerdem betrifft die Erfindung die Verwendung der neuen Pulverklarlack-Slurry für die Herstellung von Klarlackierungen für den Automobilsektor und den industriellen Sektor.

Für die Beschichtung von Automobilkarosserien werden heute vorzugsweise Flüssiglacke, d. h. Spritzlacke, verwendet. Diese verursachen zahlreiche Umweltprobleme aufgrund ihres Lösemittelgehaltes. Dies gilt auch für die Fälle der Verwendung von Wasserklarlacken, weil diese noch immer gewisse Mengen an organischen Lösemitteln enthalten.

Wasserklarlacke dieser Art sind beispielsweise aus der deutschen Patentschrift DE 196 23 371 A 1 bekannt. Direkt nach dem Auftragen trocknen die herkömmlichen Wasserklarlacke nicht als Pulver auf, sondern verfließen zu einem geschlossenen Film. Sie enthalten wässrige Sekundärdispersionen und werden im Automobilsektor für wässrige Mehrschichtlackierungen oder wässrige Einkomponenten- oder Zweikomponenten-Klarlacke eingesetzt. Hierbei werden absetzstabile Dispersionen mit einer mittleren Teilchengrößen von ca. 10 bis ca. 200 nm angestrebt. Grund ist die dem Fachmann geläufige Erfahrung, daß Dispersionspartikel um so weniger zum Absetzen neigen, je besser sie stabilisiert sind und je geringer ihre Partikelgröße ist. Für ein sicheres Applikationsverhalten und zur Reduzierung der Kocherneigung ist jedoch die Mitverwendung von bis zu 20 Gew.-% an Lösemitteln notwendig.

Aus diesem Grunde sind in den letzten Jahren vermehrte Anstrengungen unternommen worden, für die Beschichtung Pulverlacke zu verwenden. Die Ergebnisse sind jedoch bisher nicht zufriedenstellend, insbesondere zeigen Pulverklarlacke noch Schwächen hinsichtlich der Chemikalienbeständigkeit und der Vergilbung.

Viele Entwicklungen haben inzwischen das Ziel, Pulverklarlacke in Form wäßriger Dispersionen bereitzustellen, welche sich mit Flüssiglacktechnologien verarbeiten lassen. Diese Dispersionen werden auch als Pulverklarlack-Slurries bezeichnet. Diese üblichen und bekannten Pulverklarlack-Slurries können im Gegensatz zu den Pulverklarlacken in konventionellen Naßlackieranlagen verarbeitet werden und lassen sich bei wesentlich niedrigeren Schichtdicken von ca. 40 µm gegenüber ca. 80 µm bei Pulverlacken mit gutem Verlauf und einer den Pulverlacken vergleichbaren Chemikalienfestigkeit applizieren.

So ist aus der europäischen Patentschrift EP 0 652 264 A 1 oder der deutschen Patentanmeldung DE 196 18 657 A 1 eine Pulverklarlack-Slurry bekannt, bei der die festen Bindemittel- und Vernetzungsmittelkomponenten und gegebenenfalls Zusatzstoffe und Additive, wie es bei der Herstellung von Pulverlacken üblich ist, zunächst gemeinsam extrudiert und anschließend trocken vermahlen werden, wonach sie in einem weiteren Schritt mit Hilfe von Emulgatoren und Netzmitteln in einer Naßvermahlung in eine Pulverklarlack-Slurry überführt werden.

Damit es bei der Naßvermahlung nicht zum Zusetzen der Mahlvorrichtungen, beispielsweise der Rührwerkskugelmühlen, kommt, müssen die Pulverklarlack-Slurries bzw. die hierin enthaltenen Partikel nach der vorstehend genannten deutschen Patentanmeldung eine Glastemperatur von 20 bis 90, vorzugsweise 40 bis 70°C aufweisen. Diese Randbedingung schränkt die Variationsbreite der stofflichen Zusammensetzung der bekannten Pulverklarlack-Slurries erheblich ein.

Andererseits kann auf eine Naßvermahlung nicht verzichtet werden, da ansonsten in der Pulverklarlack-Slurry vorhandenes Grobkorn nicht zerkleinert wird.

Die bekannte Pulverklarlack-Slurry muß zum einen aus anwendungstechnischen Gründen vergleichsweise grobe Partikel einer mittleren Teilchengröße von 2 bis 6 µm enthalten. Zum anderen muß sie vor der Applikation filtriert werden. Hierbei bewirken bereits geringste Grobkomanteile (Teilchengröße > 10µm) ein Verstopfen der Filter, so daß der Produktionsprozeß abgebrochen werden muß, was technisch und wirtschaftlich von Nachteil ist.

Aus der deutschen Patentschrift DE 196 17 086 A 1 ist eine Pulverklarlack-Slurry bekannt, welche eine mittlere Teilchengröße der festen Partikel von 0,1 bis 10 µm aufweist. Vorzugsweise werden hierbei mittlere Teilchengröße von 0,23 bis 0,43 µm angewandt. Es ist notwendig, zur Stabilisierung zusätzlich zu der ionischen Stabilisierung auch noch externe Emulgatoren anzuwenden - in der Regel Polyethylenoxidaddukte, die die Beständigkeit der Lackierung gegenüber Wasser und Feuchtigkeit vermindern. Außerdem enthalten diese bekannten Pulverklarlack-Slurries noch immer gewisser Mengen an organischen Cosolventien oder Verlaufmittel, welche nicht entfernt werden können, weil sie für die Verlaufseigenschaften des angetrockneten Films essentiell sind. Überdies sind zu ihrer Herstellung spezielle Aggregate wie Druckentspannungshomogenisierdüsen notwendig. Vor ihrer Applikation werden sie mit Hilfe von Verdickem auf die Applikationsviskosität eingestellt. Ein komplexes Viskositätsverhalten wird nicht beschrieben. Die Patentschrift erteilt ferner keine Lehre, wie Probleme der Filtrierbarkeit bei Pulverklarlack-Slurries gelöst werden könnten.

In der nicht vorveröffentlichten deutschen Patentanmeldung DE 198 41 842 wird eine Pulverklarlack-Slurry beschrieben, die von organischen Lösemitteln und externen Emulgatoren frei ist und feste sphärische Partikel einer mittleren Teilchengröße von 0,8 bis 20 µm und einer maximalen Teilchengröße von 30 µm enthält, wobei die Pulverklarlack-Slurry einen Gehalt an Ionen bildenden Gruppen von 0,05 bis 1 meq/g, einen Gehalt an Neutralisationsmitteln von 0,05 bis 1 meq/g und eine Viskosität von (i) 50 bis 1000 mPas bei einer Scherrate von 1.000 s⁻¹, (ii) 150 bis 8.000 mPas bei einer Scherrate von 10 s⁻¹ und (iii) 180 bis 12.000 mPas bei einer Scherrate von 1 s⁻¹ aufweist.

Diese Pulverklarlack-Slurry ist mit einer geringeren Anzahl an Verarbeitungsschritten herstellbar als die bekannten Pulverklarlack-Slurries; dabei weist sie aber aufgrund ihrer typischen Pulverslurryeigenschaften mit Restlösemittelgehalten von < 1% und ihren vergleichbaren Partikelgrößen ein ähnlich vorteilhaftes Applikationsverhalten auf wie diese. Im Gegensatz zu den bekannten Wasserklarlacken hat sie ein sichereres Applikationverhalten hinsichtlich Kochern bei den geforderten Filmschichtstärken von ca. 40 - 50 µm auch ohne Zuhilfenahme von organischen Lösemitteln. Außerdem wahrt sie bzw. das Verfahren zu ihrer Herstellung weiterhin den wesentlichen Vorteil der Vermischung von Komponenten in Lösung, nämlich die sehr gute Homogenität der resultierenden Partikel. Es hat sich gezeigt, daß auch diese Pulverklarlack-Slurry vor ihrer Applikation filtriert werden muß und hierbei ähnliche Probleme wie die bekannten Pulverklarlack-Slurries aufwirft. Ob und - wenn ja - unter welchen Randbedingungen die in der DE-A-198 41 842 beschriebene Pulverklarlack-Slurry einer Naßvermahlung unterworfen werden kann, wird hierin nicht gesagt.

Aus der WO 00/69979 is ein Verfahren zur Herstellung von Pulverslurries bekannt, bei dem die Slurries traditionell durch dispergieren von Pulvern in Wasser hergestellt werden. Die Darstellung von Slurries durch Entzug von organischem Lösungsmittel in Wasser ist in WO 00/69979 nicht beschrieben.

Aufgabe der vorliegenden Erfindung ist es, eine neue Pulverklarlack-Slurry zur Verfügung zu stellen, welche die Nachteile des Standes der Technik nicht mehr länger aufweist. Insbesondere soll die neue Pulverklarlack-Slurry mit einer geringeren Anzahl an Verarbeitungsschritten herstellbar sein als die herkömmlichen Pulverklarlack-Slurries; dabei sollen sie aber aufgrund ihrer typischen Pulverslurryeigenschaften mit Restlösemittelgehalten von < 1% und ihren vergleichbaren Partikelgrößen ein ähnlich vorteilhaftes Applikationsverhalten aufweisen wie diese. Im Gegensatz zu den bekannten Wasserklarlacken sollen die neuen Pulverklarlack-Slurries ein sichereres Applikationverhalten hinsichtlich Kochern bei den geforderten Filmschichtstärken von ca. 40 - 50 µm auch ohne Zuhilfenahme von organischen Lösemitteln gewährleisten. Außerdem soll sie ohne Probleme einer Naßvermahlung unterworfen werden können. Hierbei soll ihre stoffliche Zusammensetzung erheblich breiter als die der bekannten Pulverklarlack-Slurries variiert werden können, ohne daß bei der Naßvermahlung Probleme auftreten. D. h., die neue Pulverklarlack-Slurry soll hinsichtlich der Naßvermahlung ein erheblich weiteres Verarbeitungsfenster aufweisen als die bekannten. Nach der Naßvermahlung soll die neue Pulverklarlack-Slurry problemlos filtrierbar sein.

Außerdem lag der vorliegenden Erfindung die Aufgabe zugrunde, ein neues Verfahren zur Herstellung von Pulverklarlack-Slurries zu finden, welches den wesentlichen Vorteil der Vermischung von Komponenten in Lösung - die sehr gute Homogenität der resultierenden Partikel - weiterhin wahrt.

Demgemäß wurde das Verfahren zur Herstellung einer strukturviskose, von organischen Lösemitteln freie Pulverklarlack-Slurry, die feste und/oder hochviskose, unter Lagerungs- und Anwendungsbedingungen dimensionsstabile Partikel einer mittleren Teilchengröße von 0,8 bis 20 µm enthält, wobei mindestens 99% der Teilchen eine Teilchengröße <30 µm aufweisen, durch
1) Emulgieren einer organischen Lösung, enthaltend Bindemittel und Vernetzungsmittel, wodurch eine Emulsion vom Typ Öl-in-Wasser resultiert,
2) Entfernen des organischen Lösemittels oder der organischen Lösemittel und
3) Naßvermahlung der resultierenden Slurry
gefunden.

Im folgenden wird die neue, strukturviskose, von organischen Lösemitteln freie Pulverklarlack-Slurry der Kürze halber als "erfindungsgemäße Slurry" bezeichnet.

Weitere erfindungsgemäße Gegenstände gehen aus der Beschreibung hervor.

Im Hinblick auf den Stand der Technik war es überraschend und für den Fachmann nicht vorhersehbar, daß die der vorliegenden Erfindung zugrunde liegende Aufgabe mit Hilfe des erfindungsgemäßen Verfahrens gelöst werden konnte. Insbesondere war es überraschend, daß die erfindungsgemäße Slurry bei Temperaturen naßvermahlen werden konnte, die oberhalb der Mindestfilmbildetemperatur (MFT) ihrer Partikel lagen, ohne daß dabei Probleme auftraten. Des weiteren war es überraschend, daß die erfindungsgemäße Slurry auch ohne externe Emulgatoren stabil war.

Für die erfindungsgemäße Slurry ist es wesentlich, daß die mittlere Teilchengröße der festen Partikel bei 0,8 bis 20 µm, und besonders bevorzugt bei 2 bis 6 µm liegt. Unter mittlerer Teilchengröße wird der nach der

Laserbeugungsmethode ermittelte 50%-Medianwert verstanden, d.h., 50% der Partikel haben einen Teilchendurchmesser ≤ dem Medianwert und 50% der Partikel einen Teilchendurchmesser ≥ dem Medianwert.

Slurries mit derartigen mittleren Teilchengrößen und einem Lösemittelgehalt von < 1% weisen ein besseres Applikationsverhalten auf und zeigen bei den applizierten Filmstärken von > 30 µm, wie sie derzeitig in der Automobilindustrie bei der Endlackierung von Automobilen praktiziert werden, überraschenderweise eine deutlich geringere Neigung zu Kochern und zum "mudcracking" als herkömmlicher Pulverklarlack-Slurries.

Die Teilchengröße findet ihre obere Begrenzung dann, wenn die Partikel aufgrund ihrer Größe beim Einbrennen nicht mehr vollständig verlaufen können, und damit der Filmverlauf negativ beeinflußt wird. In Fällen geringerer Ansprüche an das Aussehen kann sie jedoch auch höher liegen. Als Obergrenze werden 30 µm für sinnvoll erachtet, da ab dieser Teilchengröße mit einer Verstopfung der Spülkanäle der hochempfindlichen Applikationsapparaturen zu rechnen ist.

Die in der erfindungsgemäßen Slurry enthaltenen Partikel sind fest und/oder hochviskos. Im Rahmen der vorliegenden Erfindung bedeutet "hochviskos", daß sich die Partikel unter den üblichen und bekannten Bedingungen der Lagerung und der Anwendung von Pulverklarlack-Slurries im wesentlichen wie feste Partikel verhalten.

Die in erfindungsgemäßen Slurry enthaltenen Partikel sind außerdem dimensionsstabil. Im Rahmen der vorliegenden Erfindung bedeutet "dimensionsstabil", daß die Partikel unter den üblichen und bekannten Bedingungen der Lagerung und der Anwendung von Pulverklarlack-Slurries weder agglomerieren noch in kleinere Partikel zerfallen, sondern auch unter dem Einfluß von Scherkräften im wesentlichen ihre ursprünglichen Form bewahren.

Die erfindungsgemäße Slurry ist frei von organischen Lösemitteln. Im Rahmen der vorliegenden Erfindung bedeutet dies, daß sie einen Restgehalt an flüchtigen Lösemitteln von < 1 Gew.-%, bevorzugt < 0,5 Gew.-% und besonders bevorzugt < 0,2 Gew.-% hat. Erfindungsgemäß ist es von ganz besonderem Vorteil, wenn der Restgehalt unterhalb der gaschromatographischen Nachweisgrenze liegt.

Die vorstehend beschriebenen erfindungsgemäß zu verwendenden Teilchengrößen werden auch ohne Zuhilfenahme von zusätzlichen externen Emulgatoren erhalten, wenn das Bindemittel einen Gehalt an Ionen bildenden Gruppen, entsprechend einer mittleren Säurezahl oder Amin-Zahl von 3 bis 56 g KOH/g Festkörper (MEQ-Säure oder -Amin von 0,05 bis 1,0 meq/g Festkörper), vorzugsweise bis 28 (MEQ-Säure oder -Amin: bis 0,5 meq/g Festkörper) und insbesondere bis 17 (MEQ-Säure oder -Amin: bis 0,3 meq/g Festkörper), enthält.

Es wird erfindungsgemäß generell ein niedriger Gehalt solcher Gruppen angestrebt, da bei Verwendung der gebräuchlichen Vernetzungsmittel, wie zum Beispiel blockierter Polyisocyanate, freie Gruppen dieser Art im Film zurückbleiben und diese die Festigkeit gegenüber Umweltstoffen und Chemikalien vermindern können. Andererseits muß der Säuregruppengehalt noch genügend hoch sein, um die gewünschte Stabilisierung zu gewährleisten.

Die Ionen bildenden Gruppen werden mit Hilfe von Neutralisationsmitteln zu 100% oder auch nur zu < 100% teilneutralisiert. Die Menge des Neutralisationsmittels wird in der Weise gewählt, daß der MEQ -Wert der erfindungsgemäßen Slurry unterhalb 1, vorzugsweise unterhalb 0,5 und insbesondere unterhalb 0,3 meq/g Festkörper liegt. Erfindungsgemäß ist es von Vorteil, wenn die Menge des Neutralisationsmittels mindestens einem MEQ-Wert von 0,05 meq/g Festkörper entspricht.

Die chemische Natur des Bindemittels ist daher in der Regel nicht beschränkend, solange hierin Ionen bildende Gruppen enthalten sind, die über eine Neutralisation in Salzgruppen überführbar sind und dadurch eine ionische Stabilisierung der Partikel in Wasser übernehmen können.

Als Anionen bildende Gruppen kommen bevorzugt Säuregruppen wie Carbonsäure-, Sulfonsäure- oder Phosphonsäuregruppen in Betracht. Demgemäß werden als Neutralisationsmittel Basen, wie Alkalimetallhydroxide, Ammoniak oder Amine verwendet. Alkalimetallhydroxide sind nur inbeschränktem Maße einsetzbar, da die Alkalimetallionen beim Einbrennen nicht flüchtig sind und durch ihre Unverträglichkeit mit organischen Stoffen den Film trüben und zu Glanzverlusten führen können. Daher sind Ammoniak oder Amine bevorzugt. Im Falle von Aminen werden wasserlösliche tertiäre Amine bevorzugt. Beispielhaft seien N,N-Dimethylethanolamin oder Aminomethylpropanol-amin (AMP) genannt.

Als Kationen bildende Gruppen kommen bevorzugt primäre, sekundäre oder tertiäre Amine in Betracht. Demgemäß werden als Neutralisationsmittel insbesondere niedermolekulare organische Säuren wie Ameisensäure, Essigsäure oder Milchsäure verwendet.

Bindemittel, welche Kationen bildende Gruppen enthalten, sind von dem Gebiet der Elektrotauchlacke bekannt. Beispielhaft sei auf die Patentschriften EP-A-0 012 463, EP-A-0 612 818 oder US-A- 4,071,428 verwiesen.

Für den bevorzugten Einsatz der erfindungsgemäß Slurry in der Automobillackierung als unpigmentierte Klarlacke werden Polymere oder Oligomere mit Säuregruppen als Ionen bildende Gruppen bevorzugt, da diese sogenannten anionischen Bindemittel in der Regel eine bessere Resistenz gegen Vergilbung als die Klasse der kationischen Bindemittel aufweisen.

Doch kationische Bindemittel mit in Kationen überführbaren Gruppen wie Aminogruppen sind prinzipiell ebenfalls verwendbar, sofern das Einsatzgebiet deren typische Nebeneigenschaften wie ihre Neigung zur Vergilbung verkraftet.

Als Bindemittel, welche Anionen bildende Gruppen enthalten, können beliebige Harze mit den vorstehend genannten Säuregruppen verwendet werden. Es ist jedoch wesentlich, daß sie daneben noch weitere Gruppen tragen, die eine Vernetzbarkeit gewährleisten. Erfindungsgemäß werden Hydroxylgruppen bevorzugt.

Als erfindungsgemäß zu verwendende Oligomere und Polymere dieser Art kommen hydroxylgruppenhaltige, vorzugsweise lineare und/oder verzweigte, blockartig, kammartig und/oder statistisch aufgebaute Poly(meth)acrylate, Polyester, Alkyde, Polyurethane, acrylierte Polyurethane, acrylierte Polyester, Polylactone, Polycarbonate, Polyether, (Meth)Acrylatdiole oder Polyharnstoffe in Betracht.

Neben den Hydroxylgruppen können die Oligomere und Polymere noch andere funktionelle Gruppen wie Acryloyl-, Ether-, Amid-, Imid-, Urethan-, Harnstoff-, Thio-, Carbonat- oder Epoxidgruppen enthalten, sofern diese nicht die Vernetzungsreaktionen stören.

Diese Oligomere und Polymere sind dem Fachmann bekannt, und zahlreiche geeignete Produkte sind am Markt erhältlich.

Erfindungsgemäß sind die Polyacrylate, die Polyester, die Alkydharze, die Polyurethane und/oder die acrylierten Polyurethane von Vorteil und werden deshalb bevorzugt verwendet.

Beispiele geeigneter Polyacrylate werden in der europäischen Patentanmeldung EP-A-0 767 185 und den amerikanischen Patentschriften US-A-5 480 493, 5 475 073 oder 5 534 598 beschrieben. Weitere Beispiele besonders bevorzugter Polyacrylate werden unter der Marke Joncryl^{R} vertrieben, wie etwa Joncryl^{R} SCX 912 und 922,5. Die Herstellung dieser Polyacrylate ist allgemein bekannt und wird beispielsweise in dem Standardwerk Houben-Weyl, Methoden der organischen Chemie, 4. Auflage, Band 14/1, Seiten 24 bis 255, 1961, beschrieben.

Die Herstellung der erfindungsgemäß bevorzugt verwendeten Polyester und Alkydharze ist allgemein bekannt und wird beispielsweise in dem Standardwerk Ullmanns Encyklopädie der technische Chemie, 3. Auflage, Band 14, Urban & Schwarzenberg, München, Berlin, 1963, Seiten 80 bis 89 und Seiten 99 bis 105, sowie in den Büchern: "Résines Alkydes-Polyesters" von J. Bourry, Paris, Verlag Dunod, 1952, "Alkyd Resins" von C. R. Martens, Reinhold Publishing Corporation, New York, 1961, sowie "Alkyd Resin Technology" von T. C. Patton, Intersience Publishers, 1962, beschrieben.

Die erfindungsgemäß besonders bevorzugt zu verwendenden Polyurethane und/oder acrylierten Polyurethane werden beispielsweise in den Patentschriften EP-A-0 708 788, DE-A-44 01544 oder DE-A-195 34 361 beschrieben.

Als Vernetzungsmittel sind alle auf dem Gebiet der lichtstabilen Klarlacke gebräuchlichen Vernetzungsmittel geeignet. Beispiele hierfür sind veretherte Melamin-Formaldehydharze, Benzoguanaminharze, Siloxangruppen enthaltende Verbindungen oder Harze, Anhydridgruppen enthaltende Verbindungen oder Harze, Epoxidgruppen enthaltende Verbindungen oder Harze, blockierte und/oder unblockierte Polyisocyanate und/oder Tris(alkoxycarbonylamino)triazine, wie sie in den Patentschriften US-A-4 939 213, US-A-5 084 541, US-A-5 288 865 oder EP-A-0 604 922 beschrieben werden. Erfindungsgemäß sind die blockierten Polyisocyanate vorteilhaft und werden deshalb besonders bevorzugt verwendet. Beispiele geeigneter blockierter Polyisocyanate werden in den deutschen Patentschriften DE-A-196 17 086 und 196 31 269 sowie in den europäischen Patentschriften EP-A-0 004 571 und 0 582 051 beschrieben.

Die erfindungsgemäßer Slurry enthält bevorzugt nichtionische und ionische Verdicker. Hierdurch wird der Neigung der vergleichsweise großen festen Partikel zur Sedimentation wirksam begegnet und es wird zugleich die Strukturviskosität eingestellt.

Beispiele nichtionischer Verdicker sind Hydroxyethylcellulose und Polyvinylalkohole. Sogenannte nichtionische Assoziativ-Verdicker sind in vielfältiger Auswahl ebenfalls am Markt verfügbar. Sie bestehen beispielsweise aus wasserverdünnbaren Polyurethanen, die Reaktionsprodukte von wasserlöslichen Polyetherdiolen, aliphatischen Diisocyanaten und monofunktionellen hydroxylischen Verbindungen mit organophilem Rest sind.

Ebenfalls kommerziell erhältlich sind ionische Verdicker. Diese enthalten üblicherweise anionische Gruppen und basieren beispielsweise auf speziellen Polyacrylatharzen mit Säuregruppen, die teilweise oder vollständig neutralisiert sein können.

Beispiele geeigneter, erfindungsgemäß zu verwendender Verdicker sind aus dem Lehrbuch "Lackadditive" von Johan Bielemann, Wiley-VCH, Weinheim, New York, 1998, Seiten 31 bis 65, bekannt.

Für die erfindungsgemäße Slurry ist es besonders vorteilhaft, wenn beide der vorstehend beschriebenen Verdicker-Typen hierin enthalten sind. Die Menge der zuzusetzenden Verdicker und das Verhältnis von ionischem zu nichtionischem Verdicker richtet sich nach der gewünschten Viskosität der erfindungsgemäßen Slurry, die wiederum von der benötigten Absetzstabilität und den speziellen Bedürfnissen der Spritzapplikation vorgegeben werden. Der Fachmann kann daher die Menge der Verdicker und das Verhältnis der Verdicker-Typen zueinander anhand einfacher Überlegungen gegebenenfalls unter Zuhilfenahme von Vorversuchen ermitteln.

Vorzugsweise wird ein Viskositätsbereich von 50 bis 1.500 mPas bei einer Scherrate von 1000 s⁻¹ und von 150 bis 8.000 mPas bei einer Scherrate von 100 s⁻¹ eingestellt.

Dieses als "strukturviskos" bekannte Viskositätsverhalten beschreibt einen Zustand, der einerseits den Bedürfnissen der Spritzapplikation und andererseits auch den Erfordernissen hinsichtlich Lager- und Absetzstabilität Rechnung trägt: Im bewegten Zustand, wie beispielsweise beim Umpumpen der erfindungsgemäßen Slurry in der Ringleitung der Lackieranlage und beim Versprühen, nimmt die erfindungsgemäße Slurry einen niederviskosen Zustand ein, der eine gute Verarbeitbarkeit gewährleistet. Ohne Scherbeanspruchung hingegen steigt die Viskosität an und gewährleistet auf diese Weise, daß der bereits auf dem zu lackierenden Substrat befindliche Lack eine verringerte Neigung zum Ablaufen an senkrechten Flächen zeigt ("Läuferbildung"). In gleicher Weise führt die höhere Viskosität im unbewegten Zustand, wie etwa bei der Lagerung, dazu, daß ein Absetzen der festen Partikel größtenteils verhindert wird oder ein Wiederaufrühren der während der Lagerzeit nur schwach abgesetzten erfindungsgemäßen Slurry gewährleistet ist.

Die festen Partikeln der erfindungsgemäßen Slurry können neben den vorstehend beschriebenen wesentlichen Bestandteilen Additive enthalten, wie sie in Klarlacken üblicherweise verwendet werden. Hierbei ist es wesentlich, daß diese Additive die Mindestfilmbildetemperatur (MFT) bzw. die Glasübergangstemperatur Tg der Bindemittel nicht wesentlich absenken.

Beispiele geeigneter Additive sind Polymere, Katalysatoren für die Vernetzung, Entschäumer, Haftvermittler, Additive zur Verbesserung der Untergrundbenetzung, Additive zur Verbesserung der Oberflächenglätte, Mattierungsmittel, Lichtschutzmittel, Korrosionsinhibitoren, Biozide, Flammschutzmittel oder Polymerisationsinhibitoren, insbesondere Photoinhibitoren, wie sie in dem Buch "Lackadditive" von Johan Bielemann, Wiley-VCH, Weinheim, New York, 1998, beschrieben werden.

Der erfindungsgemäßen Slurry können im Film einvemetzbare Verlaufhilfsmittel, Reaktivverdünner oder vernetzende polyolische Komponenten zugesetzt werden. Wichtig ist jedoch, daß diese Komponenten sich bevorzugt in der äußeren, wässrigen Phase der erfindungsgemäßen Slurry befinden und nicht in der dispersen organischen Phase, wo sie eine Absenkung der Mindestfilmbildetemperatur der hierin enthaltenen Partikel und damit eine Koaleszenz oder Koagulation von gegebenenfalls abgesetzten Partikeln bewirken würden.

Beispiele für geeignete Verbindungen dieser Art sind oligomere Polyole, welche aus oligomeren Zwischenprodukten, die durch Metathesereaktionen von acyclischen Monoolefinen und cyclischen Monoolefinen gewonnen werden, durch Hydroformylierung und anschließender Hydrierung erhältlich sind; Beispiele geeigneter cyclischer Monoolefme sind Cyclobuten, Cyclopenten, Cyclohexen, Cycloocten, Cyclohepten, Norbonen oder 7- Oxanorbonen; Beispiele geeigneter acyclischer Monoolefine sind in Kohlenwasserstoffgemischen enthalten, die in der Erdölverarbeitung durch Cracken erhalten werden (C₅-Schnitt); Beispiele geeigneter, erfindungsgemäß zu verwendender oligomerer Polyole weisen eine Hydroxylzahl (OHZ) von 200 bis 450, ein zahlenmittleres Molekulargewicht Mn von 400 bis 1.000 und ein massenmittleres Molekulargewicht M_{w} von 600 bis 1.100 auf;

Weitere Beispiele für geeignete Verbindungen dieser Art sind verzweigte, cyclische und/oder acyclische C₉-C₁₆-Alkane, die mit mindestens zwei Hydroxylgruppen funktionalisiert sind, insbesondere die stellungsisomeren Diethyloctandiole, sowie Cyclohexandimethanol, Hydroxypivalinsäureneopentylglykolester, Neopentylglykol, Trimethylolpropan oder Pentaerythrit.

Erfindungsgemäß ist es von Vorteil, die erfindungsgemäße Slurry mit Hilfe des erfindungsgemäßen Verfahrens herzustellen.

Bei dem erfindungsgemäßen Verfahren werden die ionisch stabilisierbaren Bindemittel und die Vernetzungsmittel sowie gegebenenfalls die Additive in organischer Lösung gemischt und zusammen mit Hilfe von Neutralisationsmitteln in Wasser nach dem Sekundärdispersionsverfahren dispergiert. Sodann wird mit Wasser unter Rühren verdünnt. Es bildet sich zunächst eine Wasser-in-Öl-Emulsion aus, die bei weiterer Verdünnung in eine Öl-in-Wasser-Emulsion umschlägt. Dieser Punkt wird im allgemeinen bei Festkörpergehalten von < 50 Gew.-%, bezogen auf die Emulsion, erreicht und ist äußerlich an einem stärkeren Abfall der Viskosität während der Verdünnung erkennbar.

Die so erhaltene, noch lösemittelhaltige Emulsion wird anschließend durch azeoptrope Destillation von Lösemitteln befreit (Strippen).

Erfindungsgemäß ist es von Vorteil, wenn die Mindestfilmbildetemperatur der Bindemittel mindestens 0 °C, bevorzugt mindestens 10, besonders bevorzugt mindestens 15, ganz besonders bevorzugt mindestens 20 und insbesondere mindestens 25 °C beträgt. Die Mindestfilmbildetemperatur kann ermittelt werden, indem die Dispersion mittels einer Rakel auf eine Glasplatte aufgezogen und auf einem Gradientenofen erwärmt wird. Die Temperatur, bei der die pulverförmige Schicht verfilmt, wird als Mindestfilmbildetemperatur bezeichnet. Ergänzend wird auf Römpp Lexikon Lacke und Druckfarben, Georg Thieme Verlag, Stuttgart, New York, 1998 »Mindestfilmbildetemperatur«, Seite 391, verwiesen.

Erfindungsgemäß ist es von Vorteil, wenn die zu entfernenden Lösemittel bei einer Destillationstemperatur unterhalb 70°C, bevorzugt unterhalb 50°C und insbesondere unterhalb 40°C abdestilliert werden. Gegebenenfalls wird der Destillationsdruck hierbei so gewählt, daß auch bei höhersiedenden Lösemitteln dieser Temperaturbereich eingehalten wird.

Im einfachsten Fall kann die azeotrope Destillation dadurch bewerkstelligt werden, daß man die Emulsion bei Raumtemperatur im offenen Gefäß während mehrerer Tage rührt. Im bevorzugten Fall wird die lösemittelhaltige Emulsion in einer Vakuumdestillation von den Lösemitteln befreit.

Die abgedunstete oder abdestillierte Menge an Wasser und Lösemitteln wird vorzugsweise zur Vermeidung von hohen Viskositäten durch Wasser ersetzt werden. Die Zugabe des Wassers kann vor, nach und/oder während, vorzugsweise vor, dem Abdunsten oder der Destillation durch portionsweise Zugabe erfolgen.

Nach Verlust der Lösemittel steigt die Mindestfilmbildetemperatur der dispergierten Partikel an, und es bildet sich anstelle der bisherigen lösemittelhaltigen Emulsion (flüssig-in-flüssig-Dispersion) eine fest-in-flüssig-Dispersion aus. Im Rahmen der vorliegenden Erfindung wird unter einer fest-in-flüssig-Dispersion auch eine Dispersion von hochviskosen Partikeln in Wasser verstanden.

Erfindungsgemäß werden die Partikel der resultierenden Slurry im nassen Zustand mechanisch zerkleinert, was im Rahmen der vorliegenden Erfindung als Naßvermahlung der Slurry bezeichnet wird. Vorzugsweise werden hierbei Bedingungen angewandt, daß die Temperatur des Mahlguts 70, bevorzugt 60 und insbesondere 50°C nicht überschreitet. Vorzugsweise beträgt der spezifische Energieeintrag während des Mahlprozesses 10 bis 1.000, bevorzugt 15 bis 750 und insbesondere 20 bis 500 Wh/g.

Für die Naßvermahlung können die unterschiedlichsten Vorrichtungen angewandt werden, die hohe oder niedrige Scherfelder erzeugen.

Beispiele geeigneter Vorrichtungen, die niedrige Scherfelder erzeugen, sind übliche und bekannte Rührkessel, Spalthomogenisatoren, Microfluidizer oder Dissolver.

Beispiele geeigneter Vorrichtungen, die hohe Scherfelder erzeugen, sind übliche und bekannte Rührwerksmühlen oder Inline-Dissolver.

Erfindungsgemäß werden besonders bevorzugt die Vorrichtungen, die hohe Scherfelder erzeugen, angewandt. Von diesen sind die Rührwerksmühlen erfindungsgemäß besonders vorteilhaft und werden deshalb ganz besonders bevorzugt verwendet.

Generell wird bei der Naßvermahlung die Slurry mit Hilfe geeigneter Vorrichtungen, wie Pumpen, den vorstehend beschriebenen Vorrichtungen zugeführt und im Kreis hierrüber gefahren, bis die gewünschte Teilchengröße erreicht ist und die erfindungsgemäße Slurry resultiert.

Erfindungsgemäß ist es insbesondere aus energetischen Gründen von Vorteil, wenn die zu vermahlene Slurry nur einen Teil, vorzugsweise 5 bis 90, bevorzugt 10 bis 80 und insbesondere 20 bis 70 Gew.-% der in der erfindungsgemäßen Slurry enthaltenen, vorstehend beschriebenen Verdicker enthält. Sofern diese Variante des erfindungsgemäßen Verfahrens angewandt wird, ist die restliche Menge an Verdicker nach der Naßvermahlung zuzusetzen, wodurch die erfindungsgemäße Slurry resultiert.

Die erfindungsgemäße Slurry weist vorteilhafterweise einen Festkörpergehalt von 10 bis 60 Gew.-%, insbesondere von 20 bis 50 Gew.-%, auf.

Vorzugsweise wird die erfindungsgemäße Slurry vor ihrer Verwendung filtriert. Hierfür werden die üblichen und bekannten Filtrationsvorrichtungen und Filter verwendet, wie sie auch für die Filtration der bekannten Pulverklarlack-Slurries in Betracht kommen. Die Maschenweite der Filter kann breit variieren und richtet sich in erster Linie nach der Teilchengröße und der Teilchengrößenverteilung der Partikel der erfindungsgemäßen Slurry. Der Fachmann kann daher die geeigneten Filter leicht anhand dieses physikalischen Parameters ermitteln. Beispiele geeigneter Filter sind Beutelfilter. Diese sind am Markt unter den Marken Pong® oder Cuno® erhältlich. Vorzugsweise werden Beutelfilter mit den Maschenweiten 10 bis 50 µm verwendet, beispielsweise Pong® 10 bis Pong® 50.

Hierbei zeigt sich der weitere besondere Vorteil der erfindungsgemäßen Slurry, nämlich daß sie selbst dann problemlos filtriert werden kann, wenn bei der Naßvermahlung die Mindestfilmbildetemperatur der hierin enthaltenen Partikel überschritten wurde.

Zur Herstellung der erfindungsgemäßen Klarlackierungen wird die erfindungsgemäße Slurry auf das zu beschichtende Substrat appliziert. Hierbei brauchen keine besonderen Maßnahmen ergriffen zu werden, sondern die Applikation kann nach den üblichen und bekannten Verfahren erfolgen, was ein weiterer besonderer Vorteil der erfindungsgemäßen Slurry ist.

Nach ihrer Applikation trocknet die erfmdungsgemäße Slurry problemlos auf und zeigt bei der Verarbeitungstemperatur, in der Regel bei Raumtemperatur, kein Verfilmen. D.h., die als Naßschicht applizierte erfindungsgemäße Slurry lüftet bei Raumtemperatur oder leicht erhöhten Temperaturen unter Wasserabgabe ab, ohne daß die darin enthaltenen Partikel ihre ursprüngliche feste Form verändern. Der pulverförmige feste Film läßt das Restwasser leichter abdampfen als ein verfließender Naßfilm. Dadurch wird die Gefahr von im gehärteten Film eingeschlossenen Blasen von verdampftem Wasser ("Kochern") vermindert. Außerdem ist die Neigung zum "mudcracking" ausgesprochen gering.

In dem nachfolgenden Einbrennschritt wird die nun weitgehend wasserfreie Pulverschicht geschmolzen und zur Vernetzung gebracht. In manchen Fällen kann es von Vorteil sein, den Verlaufsprozess und die Vernetzungsreaktion mit einem zeitlichen Versatz ablaufen zu lassen, indem ein Stufenheizprogramm oder eine sogenannte Aufheizrampe gefahren wird. Die für die vorliegenden Beispiele angemessene Vemetzungstemperatur liegt zwischen 120 und 160°C. Die entsprechende Einbrennzeit liegt zwischen 20 und 60 Minuten.

Die hierbei resultierende Klarlackierung weist hervorragende anwendungstechnische Eigenschaften auf. So haftet die erfindungsgemäße Klarlackierung fest auf allen üblichen und bekannten Basislackschichten oder auf Substraten wie Metall, Glas, Holz oder Kunststoff. Sie ist von hohem Glanz, glatt, kratzfest, witterungsbeständig und frei von Störungen. Außerdem kommt sie aufgrund ihres vorteilhaften Eigenschaftsprofils auch für Anwendungen außerhalb der Automobillackierung in Betracht, insbesondere für die Lackierung von Möbeln und die industrielle Lackierung, inklusive Coil Coating und Container Coating sowie die Beschichtung elektrotechnischer Bauteile.

### Beispiele

### Herstellbeispiel 1

### Die Herstellung eines Lösungspolyacrylatharzes

445,3 Gewichtsteile Methylethylketon wurden in einem Reaktionsgefäß vorgelegt und auf 80°C erwärmt. Zu der Vorlage wurden unter Rühren bei 80°C binnen 5 h über zwei getrennte Zulaufbehälter die Initiatorlösung, bestehend aus 47,6 Gewichtsteilen TBPEH (tert.-Butylperethylhexanoat)und 31,1 Gewichtsteile Methylethylketon, und die Monomerenmischung, bestehend aus 183,3 Gewichtsteilen tert.-Butylacrylat, 71,4 Gewichtsteilen n-Butylmethacrylat, 95,2 Gewichtsteilen Cyclohexylmethacrylat, 121,4 Gewichtsteilen Hydroxyethylmethacrylat und 4,76 Gewichtsteilen Acrylsäure, zudosiert. Anschließend wurde das Reaktionsgemisch während zwei Stunden bei 80°C erwärmt, und im Vakuum wurden bei 500 mbar ein Teil der flüchtigen Komponenten der Reaktionsmischung während 5 h abgezogen. Danach ließ man auf 50°C erkalten und trug die Harzlösung aus.

Die Harzlösung wies die folgenden Kennzahlen auf:

| | |
|---|---|
| Festkörper | 71,4 Gew.-% (1h bei 130°C) |
| Viskosität | 8,0 dPas (Platte-Kegel-Viskosimeter, bei 23°C; 55%-ige Lösung) |
| Säurezahl | 10,1 mg KOH/g Festharz |

### Herstellbeispiel 2

### Die Herstellung eines blockierten Polyisocyanats als Vernetzungsmittel

837 Teile Isophorondiisocyanat wurden in einem geeigneten Reaktionsgefäß vorgelegt und mit 0,1 Teilen Dibutylzinndilaurat versetzt. Sodann ließ man eine Lösung aus 168 Teilen Trimethylolpropan und 431 Teilen Methylethylketon langsam zulaufen. Durch die exotherme Reaktion stieg die Temperatur an. Nachdem 80°C erreicht waren, wurde die Temperatur durch äußere Kühlung konstant gehalten, und der Zulauf wurde gegebenenfalls leicht gedrosselt. Nach Ende des Zulaufs hielt man noch für ca. 1 Stunde auf dieser Temperatur, bis der Isocyanatgehalt des Festkörpers 15,7 Gew.-%, bezogen auf den Festkörper, erreicht hatte. Anschließend wurde das Reaktionsgemisch auf 40°C gekühlt, und es wurde eine Lösung von 362 Teilen 3,5-Dimethylpyrazol in 155 Teilen Methylethylketon innerhalb 30 Minuten zugegeben. Nachdem das Reaktionsgemisch sich durch die Exothermie auf 80°C erwärmt hatte, hielt man die Temperatur für 30 Minuten konstant, bis der NCO-Gehalt auf kleiner 0,1 Gew.-% abgesunken war. Sodann fügte man 47 Teile n-Butanol zu der Reaktionsmischung hinzu, hielt für weitere 30 Minuten bei 80°C und trug sie nach kurzer Kühlung aus.

Das Reaktionsprodukt wies einen Festkörpergehalt von 70 Gew.-% (1h bei 130°C) auf.

### Beispiel 1

### Die Herstellung einer erfindungsgemäßen Pulverklarlack-Slurry

975,1 Gewichtsteile der Acrylatharzlösung gemäß dem Herstellbeispiel 1 und 567,7 Gewichtsteile der Vernetzungsmittellösung gemäß Herstellbeispiel 2 wurden bei Raumtemperatur in einem offenen Rührgefäß während 15 min unter Rühren vermischt. Man fügte sodann 10,9 Gewichtsteile Cyagard® 1164 L (UV-Absorber der Firma Cytec), 10,9 Gewichtsteile Tinuvin® flüssig 123 (sterisch gehindertes Amin "HALS" der Firma Ciba Geigy) und 9,5 Gewichtsteile N,N-Dimethylethanolamin hinzu und rührte die resultierende Mischung während weiterer zwei Stunden bei Raumtemperatur. Sodann verdünnte man die Mischung mit 645,9 Gewichtsteilen deionisiertem Wasser in kleinen Portionen. Nach einer Zwischenpause von 15 min. wurden weitere 780,0 Gewichtsteile deionisiertes Wasser zugegeben. Es bildete sich eine niedrigviskose wässrige Emulsion mit einem theoretischen Festkörpergehalt von 37 Gew.-%, die bei Raumtemperatur für weitere 48 Stunden gerührt wurde. Die abgedunstete Flüssigkeitsmenge wurde durch Zugabe von deionisiertem Wasser bis zum ursprünglichen Füllstand ergänzt. Man erhielt eine Pulverklarlack-Slurry mit folgenden Kennzahlen:

| | |
|---|---|
| Festkörper (2 h 80°C) | 36,7 Gew.-% |
| Lösemittelgehalt | < 0,05% (gaschromatographisch) |

In 1.000 Gewichtsteile dieser Pulverklarlack-Slurry wurden zur Einstellung der gewünschten Strukturviskosität 22,6 Gewichtsteile Acrysol® RM 8 (nicht ionischer Assoziativ-Verdicker der Firma Rohm & Haas) und 6,0 Teile Viskalex® HV 30 (anionischer Verdicker auf Polyacrylatharzbasis der Firma Allied Colloids) eingerührt. Die resultierende erfindungsgemäße Pulverklarlack-Slurry 1 zeigte das nachfolgende Viskositätsprofil:
820 mPas bei einer Scherrate von 100 s⁻¹
210 mPas bei einer Scherrate von 1000 s⁻¹

Die resultierende Pulverklarlack-Slurry hatte eine Mindestfilmbildetemperatur von 45°C. Sie wurde mit Hilfe einer Rührwerkskugelmühle vermahlen. Dazu wurde die Pulverklarlack-Slurry mit einer Pumpe der Mühle zugeführt und so lange im Kreis über die Mühle gefahren, bis die gewünschte Qualität [Teilchengrößen: x₅₀ 2,5 µm; xₘₐₓ < 10 µm (Oberkorn: Laserbeugungsmessgerät der Firma Malvern)] erreicht war.

Die naßvermahlene Pulverklarlack-Slurry, d. h. die erfindungsgemäße Slurry, ließ sich problemlos mit Beutelfiltern (Pong® 50) filtrieren, ohne daß es dabei zu einem Zusetzen der Filter kam.

Nach 4-wöchiger Lagerung bei Raumtemperatur zeigte sich ein ganz geringer, nur locker abgesetzter Bodensatz, der mit einem einfachen Laborrührer innerhalb 5 min wieder homogen aufgerührt werden konnte.

### Beispiel 2

### Die Verwendung der erfindungsgemäßen Pulverklarlack-Slurry zur Herstellung einer Klarlackierung im Rahmen einer farb- oder effektgebenden Mehrschichtlackierung

Zur Applikation der erfindungsgemäßen Pulverklarlack-Slurry des Beispiels 1 wurde ein sogenannter integrierter Aufbau vorbereitet, der nachfolgend für einen grauen Metallicfarbton beschrieben wird:

Auf mit handelsüblichem Elektrotauchlack kathodisch beschichteten Stahltafeln wurde mit einer Becherpistole zunächst eine Funktionsschicht (Ecoprime® der Firma BASF Coatings AG) appliziert. Nach 5-minütigem Ablüften bei Raumtemperatur wurde auf diese Schicht in gleicher Weise ein grauer Wassermetallic-Basislack (Ecostar® der Firma BASF Coatings AG) appliziert und anschließend für 5 min bei 80°C vorgetrocknet.

Nach Abkühlen der Tafeln wurden in gleicher Weise die erfindungsgemäße Pulverklarlack-Slurry appliziert. Hiernach ließ man die Tafeln zunächst 5 min ablüften und anschließend 15 min lang bei 40°C vortrocknen. Dann wurden sie für 30 min bei 145°C eingebrannt.

Es resultierte Wassermetallic-Gesamtlackierung einen grauen Farbton. Die applizierten Naßschichten waren so gewählt, daß nach dem Einbrennen die Trockenschichtdicken für die Funktionsschicht und den Wassermetallic-Basislack jeweils bei 15 µm lagen. Die erfindungsgemäße Klarlackierung hatte eine Schichtdicke von 40 bis 45 µm. Die erfindungsgemäße Mehrschichtlackierung wies einen hervorragenden optischen Gesamteindruck auf. Bei der applizierten Klarlackschichtdicke waren in der Klarlackierung keine Störungen in Form von Kochern und Mudcracking erkennbar.

Die nachfolgenden Tabelle gibt einen Überblick über die durchgeführten Tests und die hierbei erhaltenen Ergebnisse.

**Tabelle:**

| **Die anwendungstechnischen Eigenschaften der erfindungsgemäßen Klarlackierung** | |
|---|---|
| **Eigenschaften** | **Beispiel 2** |
| Klarlack-Schichtdicke | 40 - 45 µm |
| Glanz bei 20° ^{*)} | 77 |
| Haze ^{*)} | 80 |
| Aussehen | brilliant |
| Verlauf | sehr gut |
| Kocher | keine |
| Mudcracking | kein |

## Patentansprüche

1. Verfahren zur Herstellung einer strukturviskosen, von organischen Lösemitteln freien Pulverklarlack-Slurry, enthaltend feste und/oder hochviskose, unter Lagerungs- und Anwendungsbedingungen dimensionsstabile Partikel einer mittleren Teilchengröße von 0,8 bis 20 µm, wobei mindestens 99% der Teilchen eine Teilchengröße ≤30 µm aufweisen, durch
1) Emulgieren einer organischen Lösung, enthaltend Bindemittel und Vernetzungsmittel, wodurch eine Emulsion vom Typ Öl-in-Wasser resultiert,
2) Entfernen des organischen Lösemittels oder der organischen Lösemittel und
3) Naßvermahlung der resultierenden Slurry.

2. Verfahren nach Anspruch 1, **dadurch gekennzeichnet, daß**
4) die naßvermahlene Slurry filtriert wird.

3. Verfahren nach Anspruch 1 oder 2, **dadurch gekennzeichnet, daß**
5) das entfernte Lösemittelvolumen nach dem Schritt (2) teilweise oder völlig durch Wasser ersetzt wird.

4. Verfahren nach einem der Ansprüche 1 bis 3, **dadurch gekennzeichnet, daß** sie einen Gehalt an lonen bildenden Gruppen von 0,05 bis 1 meq/g und einen Gehalt an Neutralisationsmitteln von 0,05 bis 1 meq/g hat.

5. Verfahren nach einem der Ansprüche 1 bis 4, **dadurch gekennzeichnet, daß** sie eine Viskosität von (i) 50 bis 1000 mPas bei einer Scherrate von 1.000 s⁻¹ und (ii) 150 bis 8.000 mPas bei einer Scherrate von 100 s⁻¹ aufweist.

6. Verfahren nach einem der Ansprüche 1 bis 5, **dadurch gekennzeichnet, daß** sie einen Festkörpergehalt von 10 bis 60 Gew.-%, insbesondere 20 bis 50 Gew.-%, hat.

7. Verfahren nach einem der Ansprüche 1 bis 6, **dadurch gekennzeichnet, daß** die mittlere Teilchengröße der Partikel bei 2 bis 6 µm liegt.

8. Verfahren nach einem der Ansprüche 1 bis 7, **dadurch gekennzeichnet, daß** hierin ionische Verdicker und nichtionische Assoziativ-Verdicker enthalten sind.

9. Verfahren nach einem der Ansprüche 1 bis 8, **dadurch gekennzeichnet, daß** die Partikel Polyole als Bindemittel und blockierte Polyisocyanate und/oder Tris(alkoxycarbonylamino)triazine als Vernetzungsmittel enthalten.

10. Verfahren nach einem der Ansprüche 1 bis 8, **dadurch gekennzeichnet, daß** die Partikel Polyacrylate als Bindemittel und blockierte Polyisocyanate als Vernetzungsmittel enthalten.

11. Verfahren nach einem der Ansprüche 1 bis 10 **dadurch gekennzeichnet, daß** die hierin enthaltenen Partikel eine Mindestfilmbildetemperatur von mindestens 0°C, insbesondere mindestens 10°C, aufweist.

12. Verfahren nach einem der Ansprüche 1 bis 11, **dadurch gekennzeichnet, daß** die organischen Lösemittel bei Temperaturen unterhalb der Mindestfilmbildetemperatur der Partikel entfernt wird.

13. Verfahren nach einem der Ansprüche 1 bis 12, **dadurch gekennzeichnet, daß** sie frei ist von externen Emulgatoren.

14. Verwendung der gemäß einem der Ansprüche 1 bis 13 hergestellten Pulverklarlack-Slurry für die Herstellung von Klarlacken für die Automobilerst- und die Automobilreparaturlackierung, die Möbellackierung und die industrielle Lackierung, inklusive Coil Coating, Container Coating und die Beschichtung von elektrotechnischen Bauteilen.

## Claims

1. Process for preparing a pseudoplastic powder clearcoat slurry which is free from organic solvents and comprises solid and/or highly viscous particles which are dimensionally stable under storage and application conditions and have an average size of from 0.8 to 20 µm, at least 99% of the particles having a size ≤ 30 µm, by
1) emulsifying an organic solution comprising binder and crosslinking agent to give an emulsion of the oil-in-water type,
2) removing the organic solvent or solvents, and
3) wet grinding the resulting slurry.

2. Process according to Claim 1, **characterized in that**
4) the wet-ground slurry is filtered.

3. Process as claimed in Claim 1 or 2, wherein
5) the volume of solvent removed is replaced in whole or in part by water after step (2).

4. Process as claimed in any of Claims 1 to 3, **characterized in that** the slurry has an ion-forming group content of from 0.05 to 1 meq/g and a neutralizing agent content of from 0.05 to 1 meq/g.

5. Process as claimed in any of Claims 1 to 4, **characterized in that** the slurry has a viscosity of (i) from 50 to 1 000 mPas at a shear rate of 1 000 s⁻¹ and (ii) from 150 to 8000 mPas at a shear rate of 100 s⁻¹.

6. Process as claimed in any of Claims 1 to 5, **characterized in that** the slurry has a solids content of from 10 to 60% by weight, in particular from 20 to 50% by weight.

7. Process as claimed in any of Claims 1 to 6, wherein the average size of the particles is from 2 to 6 µm.

8. Process as claimed in any of Claims 1 to 7, **characterized in that** the slurry comprises ionic thickeners and nonionic associative thickeners.

9. Process as claimed in any of Claims 1 to 8, wherein the particles comprise polyols as binders and blocked polyisocyanates and/or tris(alkoxycarbonylamino)triazines as crosslinking agents.

10. Process as claimed in any of Claims 1 to 8, wherein the particles comprise polyacrylates as binders and blocked polyisocyanates as crosslinking agents.

11. Process as claimed in any of Claims 1 to 10, wherein the particles in the slurry have a minimum film-forming temperature of at least 0°C, in particular at least 10°C.

12. Process as claimed in any of Claims 1 to 11, wherein the organic solvents are removed at temperatures below the minimum film-forming temperature of the particles.

13. Process as claimed in any of Claims 1 to 12, **characterized in that** the slurry is free from external emulsifiers.

14. Use of the powder clearcoat slurry prepared as claimed in any of Claims 1 to 13 to produce clearcoats for automotive OEM finishing and automotive refinish, for furniture coating and for industrial coating, including coil coating, container coating and the coating of electrical components.

## Revendications

1. Procédé pour la préparation d'une dispersion de vernis en poudre à viscosité de structure, exempte de solvants organiques, contenant des particules solides et/ou très visqueuses, à stabilité dimensionnelle dans des conditions d'utilisation et de stockage, ayant une taille moyenne de particule de 0,8 à 20 µm, au moins 99 % des particules ayant une taille de particule ≤ 30 µm, par
1) émulsification d'une solution organique contenant des liants et des agents de réticulation, de sorte qu'il en résulte une émulsion du type huile-dans-eau,
2) élimination du solvant organique ou des solvants organiques et
3) broyage par voie humide de la dispersion résultante.

2. Procédé selon la revendication 1, **caractérisé en ce que**
4) la dispersion broyée par voie humide est filtrée.

3. Procédé selon la revendication 1 ou 2, **caractérisé en ce que**
5) le volume de solvant éliminé après l'étape (2) est remplacé en partie ou en totalité par de l'eau.

4. Procédé selon l'une quelconque des revendications 1 à 3, **caractérisé en ce que** la dispersion présente une teneur de 0,05 à 1 mEq/g en groupes formant des ions et une teneur de 0,05 à 1 mEq/g en agents de neutralisation.

5. Procédé selon l'une quelconque des revendications 1 à 4, **caractérisé en ce que** la dispersion présente une viscosité de (i) 50 à 1 000 mPa.s à une vitesse de cisaillement de 1 000 s⁻¹ et (ii) 150 à 8 000 mPa.s à une vitesse de cisaillement de 100 s⁻¹.

6. Procédé selon l'une quelconque des revendications 1 à 5, **caractérisé en ce que** la dispersion présente une teneur en matière solide de 10 à 60 % en poids, en particulier de 20 à 50 % en poids.

7. Procédé selon l'une quelconque des revendications 1 à 6, **caractérisé en ce que** la taille moyenne des particules va de 2 à 6 µm.

8. Procédé selon l'une quelconque des revendications 1 à 7, **caractérisé en ce que** des épaississants ioniques et des épaississants associatifs non ioniques sont contenus dans la dispersion.

9. Procédé selon l'une quelconque des revendications 1 à 8, **caractérisé en ce que** les particules contiennent des polyols en tant que liant et des polyisocyanates bloqués et/ou des tris(alcoxycarbonylamino)triazines en tant qu'agent de réticulation.

10. Procédé selon l'une quelconque des revendications 1 à 8, **caractérisé en ce que** les particules contiennent des polyacrylates en tant que liant et des polyisocyanates bloqués en tant qu'agent de réticulation.

11. Procédé selon l'une quelconque des revendications 1 à 10, **caractérisé en ce que** les particules contenues dans la dispersion présentent une température minimale de formation de feuil d'au moins 0°C, en particulier d'au moins 10°C.

12. Procédé selon l'une quelconque des revendications 1 à 11, **caractérisé en ce que** les solvants organiques sont éliminés à des températures inférieures à la température minimale de formation de feuil des particules.

13. Procédé selon l'une quelconque des revendications 1 à 12, **caractérisé en ce que** la dispersion est exempte d'émulsifiants externes.

14. Utilisation de la dispersion de vernis en poudre préparée selon l'une quelconque des revendications 1 à 13, pour la préparation de vernis pour le premier peinturage d'automobiles et le peinturage de réparation d'automobiles, le peinturage de meubles et le peinturage industriel, y compris le peinturage de rubans continus (*coil coating*), le peinturage de récipients (*container coating*) et le revêtement de composants électrotechniques.
